**Europäisches Patentamt**

**European Patent Office**

**Office européen des brevets**

(11) Veröffentlichungsnummer: **0 284 602**
**A1**

(12) # EUROPÄISCHE PATENTANMELDUNG

(21) Anmeldenummer: **88890078.4**

(22) Anmeldetag: **28.03.88**

(51) Int. Cl.⁴: **C 02 F 11/12**
**C 02 F 11/18**

(30) Priorität: **27.03.87 AT 750/87**

(43) Veröffentlichungstag der Anmeldung:
**28.09.88 Patentblatt 88/39**

(84) Benannte Vertragsstaaten:
**BE CH DE ES FR GB GR IT LI LU NL SE**

(71) Anmelder: **WAAGNER-BIRO AKTIENGESELLSCHAFT**
**Stadlauer-Strasse 54 Postfach 11**
**A-1221 Wien (AT)**

(72) Erfinder: **Hillinger, Bruno, Dr.Dipl.-Ing.**
**Dreisteingasse 20**
**A-2371 Interbrühl (AT)**

**Berzaczy, Ludwig**
**Sobieskigasse 42,**
**A-1090 Wien (AT)**

**Beckmann, Georg Dr. Dipl.-Ing.,**
**Jacquingasse 55/10,**
**A-1030 Wien, (AT)**

(74) Vertreter: **Wallner, Gerhard, Dipl.-Ing.**
**c/o Waagner-Biro Aktiengesellschaft Patentabteilung**
**Stadlauer-Strasse 54 Postfach 11**
**A-1221 Wien (AT)**

(54) **Verfahren zur umweltfreundlichen und hygienischen Schlammentsorgung und Schlammbehandlungsanlage.**

(57) Die Erfindung betrifft ein Verfahren zur umweltfreundlichen und hygienischen Entsorgung von (Überschuß)schlämmen aus kommunalen und industriellen Kläranlagen, sowie eine Schlammbehandlungsanlage zur Durchführung des Verfahrens. Der in einer Kläranlage 2 anfallende Dünnschlamm 1 von etwa 5 % T.S. wird in einer Entwässerungseinrichtung 3 auf 35 % T.S. entwässert, und der entwässerte Schlamm zumindest teilweise in einer Schlammtrocknungseinrichtung 6 auf 85 % T.S. getrocknet und lagerfähig gemacht. Die in der Schlammtrocknungseinrichtung 6 anfallende Abwärme wird in Vorwärmern 5 zur Erwärmung des Schlammes verwendet, ebenso dient das aus dem vorgewärmten Schlamm in der Entwässerungseinrichtung 3 abgeschiedene Zentrat (Leitung 14) zur Erwärmung des Schlammes in einem Vorwärmer 4, wobei das Zentrat anschließend einer Faulung in einer Anaerobstufe 7 unterworfen wird. Durch den geschlossenen Energiekreislauf gelingt es, die benötigte Energie in der Anlage selbst zu erzeugen. Der geschlossene Kreislauf garantiert die geruchsfreie Schlammbehandlung, wobei die Wärmebehandlung des Schlammes einer thermischen Hygienisierung desselben gleichgesetzt werden kann.

EP 0 284 602 A1

## Beschreibung

### Verfahren zur umweltfreundlichen und hygienischen Schlammentsorgung und Schlammbehandlungsanlage

Erfindung betrifft ein Verfahren zur umweltfreundlichen und hygienischen Schlammentsorgung einer Kläranlage, insbesondere von kommunalem und industriellem Abwasser, bei der der in der Kläranlage anfallende Dünnschlamm von etwa 5 % auf etwa 35 % T.S. entwässert und der entwässerte Schlamm zumindest zum Teil entsorgt bzw. verbrannt wird, und eine Schlammbehandlungsanlage zur Durchführung des Verfahens.

Es sind eine Reihe von Schlammbeseitigungsverfahren bekannt, die mit Schlammeindickung arbeiten und einen relativ großen Grundflächenbedarf aufweisen. Infolge dieser großflächigen Konstruktionen sind Abdeckungen und Entlüftungen teuer, so daß meistens eine geruchsmäßige Umweltbelastung auftritt. Durch Eindickungen und Verwendung der abgesaugten Luft zur Abdeckung des Sauerstoffbedarfes von Schlammverbrennungsanlagen tritt wohl eine Verbesserung auf, die aber weder die jahreszeitlich bedingten Schwankungen noch die Energiebilanz der Anlage in Richtung Selbstversorgung ausgleicht.

Es ist daher Ziel der Erfindung, den angeführten Mängeln zu begegnen und unter strengen Umweltauflagen in einem geschlossenen Kreis die Selbstversorgung der benötigten Energien zu erreichen, und gegebenenfalls noch Energien in einer verwertbaren unproblematischen Form abzugeben.

Das erfindungsgemäße Verfahren ist dadurch gekennzeichnet, daß zumindest ein Teil des Schlammes in einer Schlammtrocknungseinrichtung auf etwa 85 % T.S. getrocknet und lagerfähig gemacht wird, und daß der in der Schlammtrocknungseinrichtung anfallende Überschußdampf zur Verwärmung des Schlammes vor seiner Entwässerung verwendet wird. Wesentliche Ausgestaltungen der Erfindung sind in den Unteransprüchen 2 bis 6 angegeben.

Die erfindungsgemäße Schlammbehandlungsanlage zur Durchführung des Verfahrens ist dadurch gekennzeichnet, daß zwischen Dünnschlammabzug eines Klärbeckens und einer Entwässerungseinrichtung mindestens zwei Stufen einer Schlammvorwärmung vorgesehen sind, die wärmetechnisch mit der Entwässerungseinrichtung und einer Schlammtrocknungseinrichtung, insbesondere einem Dampfwirbelschichttrockner, verbunden sind. Insbesondere ist zumindest die erste Stufe der Schlammvorwärmung von einem Oberflächenwärmetauscher und gegebenenfalls die zweite Stufe von einem Mischrohrwärmer gebildet.

In der angeschlossenen Fig. ist ein Schaltbild einer Schlammbehandlungsanlage beispielsweise dargestellt.

Der Dünnschlammabzug 1 einer Kläranlage 2 wird einer Entwässerungseinrichtung 3 zugeführt, wobei der Dünnschlamm über eine zumindest zweistufige (Position 4 und 5) Vorwärmeanlage geführt wird, die wärmemäßig sowohl mit der Entwässerungseinrichtung, in der relativ warmes Zentrat anfällt, und mit der Schlammtrocknungseinrichtung, wo heiße Überschußdämpfe anfallen, wärmetechnisch verbunden ist. Das von der ersten Stufe der Wärmeeinrichtung 4 abfallende Zentrat wird einer Anaerobstufe 7 zugeführt, wobei durch eine Regeleinrichtung 8 die Temperatur in der Anaerobstufe konstant auf einer Temperatur zwischen 30° und 50° C, vorzugsweise 40° C, gehalten wird. Zu diesem Zweck ist eine Bypassleitung 9 mit einem Regelventil 10 vorgesehen, die die erste Stufe 4 der Vorwärmeanlage umgehen, so daß der Abfluß temperaturmäßig gesteuert werden kann. In der Anaerobstufe wird der CSB-Bedarf des abgeführten Zentrates von etwa 8000 auf 2000 gesenkt, und das so teilweise gereinigte Abwasser in die Kläranlage unter Zumischung des Schlammes der Anaerobstufe in die Kläranlage 2 rückgeführt. Die Kläranlage 2 weist einen Eingang 11 für das zu reinigende Abwasser und einen Klarwasserabzug 12 auf. Der in der Entwässerungseinrichtung 3 anfallende Dickschlamm mit ungefähr 35 % T.S. könnte bereits ohne Stützfeuer einer Wirbelbettverbrennung zugeführt werden, wie dies mit Pfeil 13 angedeutet ist. Da die Klärleistung der Kläranlage 2 im allgemeinen abhängig von der Außentemperatur ist, ist auch die jahreszeitlich anfallende Schlamm-Menge saisonalen Bedingungen unterworfen, so daß im Winterhalbjahr, wo ein größerer Wärmebedarf besteht, weniger Schlamm zur Verbrennung zur Verfügung steht als im Sommerhalbjahr, obwohl über das Jahr gesehen ein Schlammüberschuß herrscht. Um diesen saisonalen und natürlich auch kurzzeitigen Schwankungen entgegenzutreten ist eine Schlammtrocknungseinrichtung 6 vorgesehen, in der der zumindest nicht gleich verbrennbare Schlamm von 35 % T.S. weiter auf 85 % T.S. eingedickt wird, und dabei infolge der Konzentrationsänderungen und auch der Wärmebehandlung seine unerwünschte Aktivität verliert, so daß er zur Ausgleichung dieser Schwankungen gelagert werden kann. Darüber hinaus besteht auch die Möglichkeit, den durch Temperatureinwirkung hygienisierten Schlamm als industriellen Brennstoff, beispielsweise in Kraftwerken als Kohlenersatz, zu verwenden. Da der Trockner heiße Dämpfe, etwa im Temperaturbereich von 115° C abgibt, wird dadurch die Möglichkeit gegeben, den Schlamm vor seiner Entwässerung vorzuwärmen, sodaß das Zentrat der Entwässerungsanlage 3 in der Leitung 14 gegenüber der Schlammtemperatur aus der Kläranlage im Dünnschlammabzug 1 eine Übertemperatur von 40o bis 70° C aufweist, so daß selbst nach Durchstrcmen eines Schlammvorwärmers (erste Stufe 4) noch mit genügend hoher Temperatur für eine wirtschaftlich zu betreibende Anaerobstufe 7 gegeben ist, in der, wie erwähnt, der Sauerstoffbedarf des Zentrates in relativ kurzer Zeit abgesenkt werden kann, wobei Faulgas entsteht, welches über die Leitung 15 einer Verwendung zugeführt werden kann. Wird das Faulgas in einem Faulgasmotor verwertet, so läßt sich mit der abgegebenen Leistung des Motors beispielsweise die mechanische Leistung der Entwässerungseinrichtung (Zentrifuge) ersetzen oder ein Stromgenerator antreiben und zusätzlich durch die Abwärme des Motors auch die Schlammtrocknungseinrichtung 6 beheizen, so daß Fremdenergie weitgehend ausgeschaltet werden kann. Anstelle des Faulgasmotors kann natürlich auch eine Faulgasverbrennung in einem Dampferzeuger erfolgen, wobei die erzeugte Wärmeenergie über eine Turbine und einen Generator in Strom umgewandelt wird, der dann die einzelnen Antriebe der Kläranlage deckt, wobei auch ein Teil des erzeugten getrockneten Schlammes oder auch nur ungetrockneten aber entwässerten Schlammes umweltfreundlich entsorgt wird. Der getrocknete Schlamm wird gemäß Pfeil 16 der Schlammtrocknungseinrichtung 6, die beispielsweise als Wirbelbetttrocknungsanlage mit eingehängten Heizflächen ausgebildet ist, abgezogen. In der Schlammtrocknungseinrichtung 6 werden die erzeugten Dämpfe umgewälzt und die überschüssige Menge über die Leitung 17 der zweiten Stufe 5 des Schlammvorwärmers zugeführt, wo sie zum Teil kondensiert über die Kondensatableitung 18 je nach Reinheitsgrad abgeführt wird, während die nicht kondensierbaren Bestandteile über die Leitung 19 der Schlammverbrennung zugeführt werden. Der Schlammvorwärmer 5 der zweiten Stufe kann auch als direkter Mischvorwärmer ausgeführt werden, wobei entweder der Brüden durch den Flüssigschlamminhalt in Blasenform geführt wird oder der Flüssigschlamm im Brüdeninhalt eingedüst wird; dabei entfällt die Gefahr einer Heizflächenverschmutzung. Durch das geschlossene System wird die Geruchsbelastung der Schlammbehandlungsanlage praktisch auf Null reduziert. Der Schlamm wird durch die Temperaturbehandlung sowohl im Vorwärmer als auch im Trockner weitgehend hygienisiert, so daß insbesondere bei kommunalem Abwasser eine problemlose Entsorgung (Verbrennung) möglich ist. Durch das Ausnützen der Niedertemperaturenergie zur Schlammvorwärmung läßt sich der Energiebedarf des Trockners so weit absenken, daß die restliche benötigte Energie durch die Faulgasverwertung bzw. Schlammverbrennung gedeckt ist. Ein weiterer Vorteil wird darin gesehen, daß der Dickschlamm und auch der getrocknete Dickschlamm geregelt und ohne Stützfeuerung mit gutem Wirkungsgrad verbrannt bzw. vergast werden kann, wodurch die Eigenenergieversorgung gegeben ist.

Da die Anlage praktisch nur gereinigtes Abwasser via 12 und brennbaren bzw. lagerbaren Schlamm 13 und 16 abgibt, kann man von einem perfekten Umweltschutz sprechen. Der Kondensatablaß kann ohne weiteres in den Faulbehälter 7 erfolgen, während das nicht kondensierbare in 19 und das Faulgas 15 zusammen mit dem Schlamm 13 und 16 eventuell als Stützfeuer oder in einem Faulgasmotor verbrannt wird, dessen Abwärme letzten Endes zur Beheizung des Trockners 6 Verwendung findet. Dieser geschlossene Energiekreislauf gewährleistet den energieautarken Betrieb der Anlage, so daß dieselbe mit einem Minimum an Infrastruktur auskommt und auch in Randgebieten einsetzbar ist.

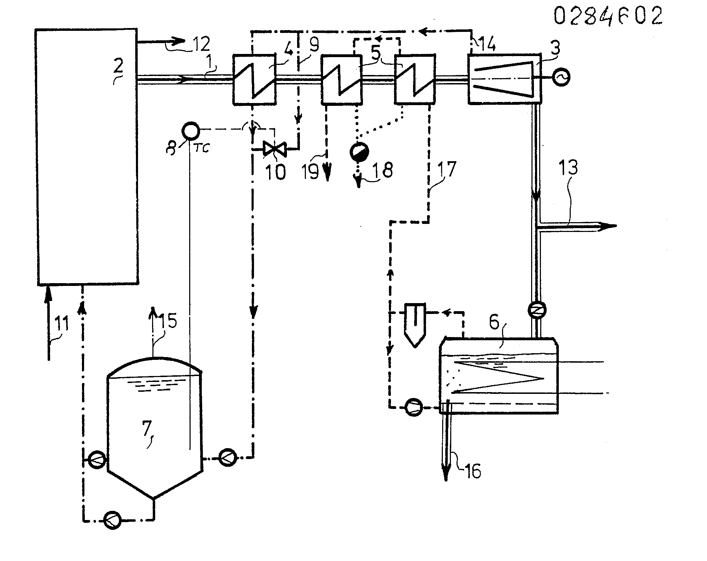

## Patentansprüche

1) Verfahren zur umweltfreundlichen und hygienischen Schlammentsorgung einer Kläranlage, insbesondere von kommunalem und/ oder industriellem Abwasser, bei der der in der Kläranlage anfallende Dünnschlamm von etwa 5 % auf etwa 35 % T.S. entwässert und der entwässerte Schlamm zumindest zum Teil entsorgt bzw. verbrannt wird, dadurch gekennzeichnet, daß zumindest ein Teil des Schlammes in einer Schlammtrocknungseinrichtung auf etwa 85 % T.S. getrocknet und lagerfähig gemacht wird und daß der in der Schlammtrocknungseinrichtung anfallende Überschußdampf zur Vorwärmung des Schlammes vor seiner Entwässerung verwendet wird.

2) Verfahren nach Anspruch 1, dadurch gekennzeichnet, daß der in der Schlammtrocknungseinrichtung anfallende Überschußdampf zur Vorwärmung des Schlammes in einer zweiten Stufe vor seiner Entwässerung und das bei der Entwässerung anfallende warme Zentrat zumindest zum Teil zur Vorwärmung des Schlammes in einer ersten Stufe verwendet wird.

3) Verfahren nach Anspruch 1, dadurch gekennzeichnet, daß der nicht auf etwa 85 % T.S. getrocknete Schlamm und/oder ein Teil des getrockneten Schlammes zur Deckung des augenblicklichen und der Rest zur Deckung der jahreszeitig bedingten und kurzzeitigen Schwankungen des Wärmebedarfes der Kläranlage in einem Wirbelschichtofen ohne Stützfeuerung verbrannt wird.

4) Verfahren nach Anspruch 2, dadurch gekennzeichnet, daß das vom Vorwärmer abströmende Zentrat einer Anaerobstufe zugeführt wird, in welcher Faulgas erzeugt und der CSB-Wert des Zentrates gesenkt wird, bevor es der Kläranlage wieder zugeführt wird.

5) Verfahren nach Anspruch 4, dadurch gekennzeichnet, daß der Vorwärmer von einem Teilstrom des bei der Entwässerung anfallenden Zentrates durchströmt wird, dessen Menge in Abhängigkeit der Temperatur in der Anaerobstufe geregelt wird, wobei in der Anaerobstufe eine Temperatur zwischen 30° und 50° C, vorzugsweise 40 ° C, gehalten wird.

6) Verfahren nach Anspruch 4, dadurch gekennzeichnet, daß das Faulgas in einem Faulgasmotor, der als Antrieb für die Entwässerungseinrichtung und/oder zur Stromerzeugung dient, oder Dampferzeuger, verbrannt wird, dessen Abwärme zur Beheizung der Schlammtrocknungseinrichtung verwendet wird.

7) Schlammbehandlungsanlage zur Durchführung des Verfahrens nach mindestens einem der Ansprüche 1 bis 6, dadurch gekennzeichnet, daß zwischen Dünnschlammabzug (1) eines Klärbeckens (2) und einer Entwässerungseinrichtung (3) mindestens zwei Stufen (4,5) einer Schlammvorwärmung vorgesehen sind, die wärmetechnisch mit der Entwässerungseinrichtung (3) und einer Schlammtrocknungseinrichtung (6), insbesondere einem Dampfwirbelschichttrockner, verbunden sind.

8) Schlammbehandlungsanlage nach Anspruch 7, dadurch gekennzeichnet, daß zumindest die erste Stufe (4) der Schlammvorwärmung von einem Oberflächenwärmetauscher und gegebenenfalls die zweite Stufe (5) von einem Mischvorwärmer gebildet ist.

9) Schlammbehandlungsanlage nach Anspruch 7, dadurch gekennzeichnet, daß eine von der Entwässerungseinrichtung (3) Flüssigkeit führende Leitung (14) über die erste Stufe (4) der Schlammvorwärmung zu einem Faulbehälter (7) und von diesem zurück in die Kläranlage (2) geführt ist.

10) Schlammbehandlungsanlage nach Anspruch 7, dadurch gekennzeichnet, daß die als Dampfwirbelschichttrockner ausgebildete Schlammtrocknungseinrichtung (6) mit kondensierendem Wasserdampf beheizt ist, deren Fluidisierungsdampf ständig im Kreislauf geführt ist, wobei der aus der Trocknung anfallende Dampfanteil in einem Vorwärmer kondensiert bzw. mit dem zu erwärmenden Schlamm durchmischt wird.

0284602

Europäisches
Patentamt

**EUROPÄISCHER RECHERCHENBERICHT**

Nummer der Anmeldung

EP  88 89 0078

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 429 055  (H. KREYENBERG)<br>* Seite 1, Ansprüche 1,2; Seite 7, Zeile 12 - Seite 8, Zeile 4; Seiten 10,11 * | 1,3 | C 02 F  11/12<br>C 02 F  11/18 |
| A | | 7,10 | |
| A | FR-A-2 521 976  (INSTITUT DE RECHERCHES HYDROLOGIQUES)<br>* Seite 7, Ansprüche 1-4; Seite 5, Zeile 15 - Seite 6; Seite 1, Zeile 30 - Seite 2, Zeile 4 * | 5,6,10 | |
| A | GWF-WASSER/ABWASSER, Band 116, Nr. 1, 1975, Seiten 29-35; S. SCHLEGEL: "Die anaerobe Behandlung von Filtratwässern thermisch konditionierter Schlämme"<br>* Seite 34, Figur 11 * | 4-6,9 | |
| A | DE-B-2 753 537  (SAARBERG-FERNWÄRME)<br>* Spalte 1, Ansprüche 1-3; Spalte 3, Zeile 30 - Spalte 4, Zeile 4 * | 1,7,8 | RECHERCHIERTE SACHGEBIETE (Int. Cl.4) |
| A | EP-A-0 185 648  (VOEST-ALPINE)<br>* Seite 6, Zeile 6 - Seite 7, Zeile 16; Seite 8, Zeile 30 - Seite 9, Zeile 4 * | 1,3,4,6 | C 02 F |

Der vorliegende Recherchenbericht wurde für alle Patentansprüche erstellt

| Recherchenort | Abschlußdatum der Recherche | Prüfer |
|---|---|---|
| DEN HAAG | 29-06-1988 | TEPLY J. |